Europäisches Patentamt

(19) European Patent Office

Office européen des brevets

(11) Publication number: **0 142 942**
**B1**

(12) **EUROPEAN PATENT SPECIFICATION**

(45) Date of publication of patent specification: **24.06.87**

(21) Application number: **84307246.3**

(22) Date of filing: **22.10.84**

(51) Int. Cl.⁴: **F 16 K 31/06**

(54) Solenoid valve assembly.

(30) Priority: **17.11.83 US 552829**

(43) Date of publication of application:
**29.05.85 Bulletin 85/22**

(45) Publication of the grant of the patent:
**24.06.87 Bulletin 87/26**

(84) Designated Contracting States:
**DE FR GB IT NL SE**

(56) References cited:
**FR-A-2 202 581**
**US-A-2 110 481**
**US-A-2 616 452**
**US-A-2 963 267**
**US-A-3 013 768**
**US-A-3 420 496**

(73) Proprietor: **GENERAL MOTORS CORPORATION**
**General Motors Building**
**3044 West Grand Boulevard**
**Detroit Michigan 48202 (US)**

(72) Inventor: **Davis, Ronald Gene**
**4334C Wild Turkey**
**Anderson Indiana 46013 (US)**
Inventor: **Dennis, David Stanley**
**834 Old Orchard Road**
**Anderson Indiana 46011 (US)**
Inventor: **Hickman, James Spencer**
**747 Greenhill Way**
**Anderson Indiana 46011 (US)**
Inventor: **Linch, William Judgement**
**Route 2**
**Knightstown Indiana 46148 (US)**

(74) Representative: **Breakwell, John Neil Bower**
**et al**
**GM Patent Section Vauxhall Motors Limited**
**Luton Office (F6) P.O. Box No. 3 Kimpton Road**
**Luton Bedfordshire LU2 OSY (GB)**

EP 0 142 942 B1

Courier Press, Leamington Spa, England.

## Description

This invention relates to a solenoid valve assembly as specified in the preamble of claim 1, for example as disclosed in US—A—3 013 768.

In one type of conventional solenoid valve assembly, a solenoid and spring-controlled valve plunger is selectively movable against a port and stop member having a centrally disposed exhaust flow passage, to thereby establish sealing contact between a flat valve surface and a flat valve seat. Such an assembly can necessitate the use of a considerable spring force, due to the flow forces occurring at the exhaust port.

The present invention is concerned with the provision of a solenoid valve assembly in which flow forces at the exhaust port are reduced, to thereby make it possible to reduce the spring force and magnetic force requirements.

To this end a solenoid valve assembly in accordance with the present invention is characterised by the features specified in the characterising portion of claim 1.

Thus to minimise contact between the valve member and the frustoconical surface, in the seated position of the valve member the flat end surface of the valve member may make essentially line-surface sealing contact at the intersection of the radially inner portion of the frustoconical surface and the central flow passage.

In the solenoid valve assembly disclosed in the said US—A—3 013 768, on the other hand, there is a substantial annular area of contact between a sealing element of a solenoid plunger and a flat annular end surface of a fixed frustoconically-surfaced lower valve seat. The upper valve seat is flat and has an annular recess.

US—A—2 963 267 discloses a solenoid valve having a frustoconical seat to attain proper fluid flow, but the valve is of a different type from the present valve, and the seat has no annular recess.

US—A—2 110 481 discloses a relief valve (not a solenoid valve) having a seat with an annular V-shaped recess but no frustoconical surface, the valve thus being of a different type from the present valve, and the specific form of the valve seat relating to a different problem.

In the drawing:

Figure 1 is an elevational view, with parts broken away and in section, of one embodiment of a solenoid valve assembly in accordance with the present invention;

Figure 2 is an enlarged view of a portion of Figure 1; and

Figure 3 is a perspective view of part of a component of the solenoid valve assembly.

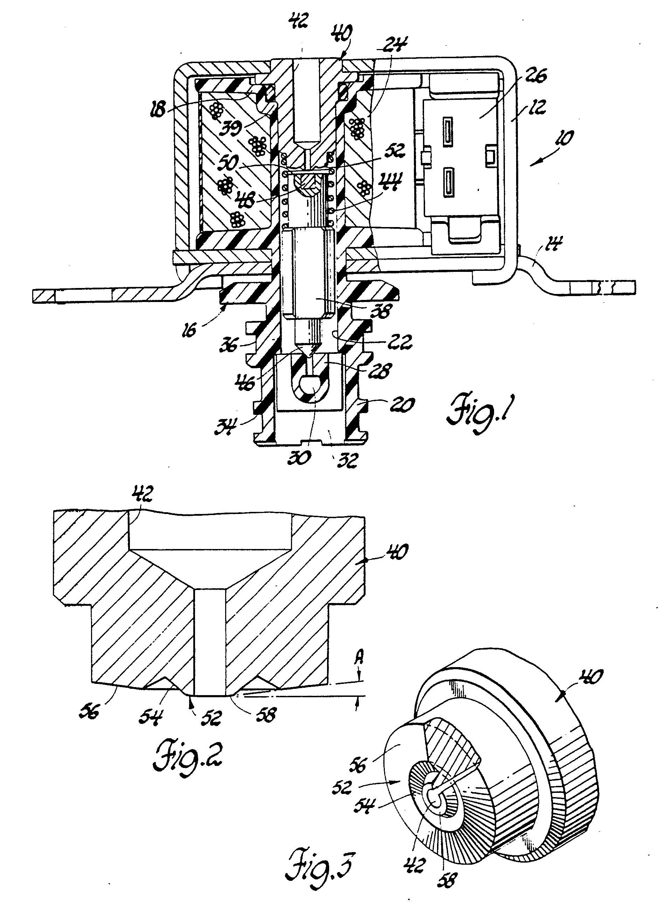

With reference now to the drawing, wherein like characters represent the same or corresponding parts throughout the several views, there is shown in Figure 1 a solenoid valve assembly 10 which includes a metal housing 12 secured to a mounting bracket 14. The housing 12 has disposed therein a valve body 16 composed of non-metallic material such as plastics material. The valve body 16 has a reel portion 18, a fluid port portion 20 and a central bore 22. The reel portion 18 is surrounded by a solenoid coil 24 which is adapted to be connected to an electrical control circuit, not shown, by way of an electrical fitting 26.

The fluid port portion 20 includes an integrally formed pressure inlet portion 28 having a pressure passage 30 and a control passage 32. The outer surface of the fluid port portion 20 is grooved at 34 and 36 to support ring seals, not shown, for use when the solenoid valve 10 is secured in a valve block for a hydraulic control system in a well-known manner. The highpressure port formed by the pressure passage 30 is open to the external area of the fluid port portion 20 between the grooves 34 and 36.

The valve bore 22 has disposed therein a slidable valve plunger 38 (valve member). The end 39 of the valve bore 22 is closed by an exhaust port and a solenoid stop member 40. The stop member 40 is maintained in the valve bore 22 by the housing 12. The stop member 40 has a central stepped-diameter passage 42 which serves as the exhaust port or exhaust flow passage for the solenoid valve 10.

As is shown in Figure 1, the valve plunger 38 is disposed between the solenoid stop member 40 and the pressure inlet portion 28. The valve plunger 38 is urged towards the inlet portion 28 by a spring 44. The valve plunger 38 has a pointed end 46 which closes the passage 30, when urged into abutment with the inlet portion 28 by the spring 44 to close off the inlet passage 30 from the control passage 32. The stop member 40 and the valve plunger 38 are formed from magnetic metals such that when the solenoid coil 24 is energized, the valve plunger 38 will move towards the stop member 40 depending upon the power supplied to the solenoid coil 24 and the strength of the spring 44, as is well known.

To prevent magnetic lock-up between the valve plunger 38 and the solenoid stop member 40, a non-magnetic insert 48 is disposed in the valve plunger 38. The insert 48 is preferably made of stainless steel. The end 50 of the valve plunger 38 which is adapted to seat on the solenoid stop member 40 is a flat surface.

As is shown in Figures 1 and 2, the smaller-diameter portion of the flow passage 42 extends through the end surface 52 of the solenoid stop member 40 adjacent the flat surface 50 of the valve plunger 38. The end surface 52 of the stop member 40 is generally frusto-conical in shape, such that it diverges from the flat surface 50 as it extends radially outwardly from the flow passage 42. The frusto-conical end surface 52 is interrupted by a groove-like recess 54 which, as is best seen in Figure 2, is V-shaped in cross-section. The frusto-conical surface is therefore divided essentially into two annular portions, namely a radially outer surface portion 56 and a radially inner surface portion 58. The inner surface portion 58 extends from the outer edge of the passage 42 to the inner edge of the recess 54, and the outer surface portion 56 extends from the outer edge of the recess 54. The only valve seat area available for the flat end surface 50 of the valve plunger 38 to seal against is essentially a line surface at the intersection of the passage 42 and the surface 58.

As the flat end surface 50 seats against the solenoid stop member 40, the flow forces which generally accompany the abutment of two flat surfaces is reduced considerably due to the presence of the recess 54 and the frusto-conical shape of the end surface 52. This structure reduces the flow forces such that the force required in the spring 44 is much less than the force required in conventional valves. Since the force in the spring 44 is reduced, the power consumption and/or the size of the solenoid 24 can also be reduced. Thus the valve is capable of higher efficiency than conventional valves.

This valve structure has been found to work equally well both in on/off type solenoid valves and in proportional control or duty cycle-controlled solenoid valves.

The following dimensions have been found to be acceptable in a transmission control valve having a pressure range of 0 to 17,500 g/cm² (0 to 250 psi) when controlled by a voltage source of 11 to 15 volts:

| | |
|---|---|
| Diameter of Passage 42 | 0.7—0.8 mm |
| Angle A | 7° |
| Outer Diameter of 58 | 1.2—1.3 mm |
| Inner Diameter of 56 | 2.5—2.6 mm |
| Outer Diameter of 56 | 5.1—5.3 mm |

## Claims

1. A solenoid valve assembly having a valve body (16), a bore (22) in the valve body (16), a fluid port in the valve body (16) comprising an inlet port (20) and an exhaust port, a valve member (38) slidably disposed in the bore (22) and having a flat end surface (50) adapted to seat on the exhaust port, spring means (44) for urging the valve member (38) away from the exhaust port, and selectively energisable solenoid coil means (24) surrounding a portion of the valve member (38) for effecting selective movement of the valve member (38) towards a seated position closing the exhaust port, characterised in that the exhaust port in the valve body (16) is constituted by a central flow passage (42), a generally frusto-conical surface (52) diverges from the central flow passage (42) and has a radially inner portion (58) and a radially outer portion (56), an annular recess (54) of V-shaped cross-section interrupts the frusto-conical surface (52) intermediate the inner and outer portions (58 and 56) thereof, and the flat end surface (50) of the valve member (38) is adapted to seat at the intersection of the central flow passage (42) and the frusto-conical surface (52), whereby substantial contact between the valve member (38) and the frusto-conical surface (52) is prevented.

2. A solenoid valve assembly according to claim 1, characterised in that in the seated position of the valve member (38) the flat end surface (50) of the valve member makes essentially line-surface sealing contact at the intersection of the radially inner portion (58) of the frusto-conical surface (52) and the central flow passage (42).

3. A solenoid valve assembly according to claim 1 or 2, characterised in that the valve member (38) and the valve body (16) are made of magnetic material, and the valve member includes a non-magnetic insert (48) in the region of seating contact with the valve body, effective to prevent magnetic lock-up between the valve member and the valve body.

## Patentansprüche

1. Magnetventilanordnung mit einem Ventilgehäuse (16), einer Bohrung (22) in dem Ventilgehäuse (16), Fluidanschlüssen in dem Ventilgehäuse (16), die eine Einlaß-Anschlußöffnung (20) und eine Auslaß-Anschlußöffnung umfassen, einem in der Bohrung (22) gleitbar angeordneten Ventilglied (38) mit einer ebenen Endfläche (50), die zum Aufsitzen auf der Auslaßöffnung ausgelegt ist, Federmitteln (44), um das Ventilglied (38) von der Auslaßöffnung wegzudrängen, und wahlweise beaufschlagbaren Magnetspulenmitteln (24), die einen Abschnitt des Ventilgliedes (38) umgeben, um eine wahlweise Bewegung des Ventilgliedes (38) zu einer die Auslaßöffnung verschließenden Aufsitzstellung zu bewirken, dadurch gekennzeichnet, daß die Auslaßöffnung in dem Ventilgehäuse (16) durch einen zentralen Strömungsdurchlaß (42) gebildet ist, daß eine allgemein kegelstumpfförmige Fläche (52) von dem zentralen Strömungsdurchlaß (42) aus auseinandergeht und einen radial inneren Abschnitt (58) und einen radial äußeren Abschnitt (56) besitzt, daß ein ringförmiger Einschnitt (54) mit V-förmigem Querschnitt die kegelstumpfförmige Fläche (52) zwischen ihren inneren und äußeren Abschnitten (58 und 56) unterbricht, und daß die ebene Endfläche (50) des Ventilgliedes (38) zum Aufsitzen an der Überschneidung des zentralen Strömungsdurchlasses (42) und der kegelstumpfförmigen Fläche (52) ausgelegt ist, wodurch wesentliche Berührung zwischen dem Ventilglied (38) und der kegelstumpfförmigen Fläche (52) verhindert wird.

2. Magnetventilanordnung nach Anspruch 1, dadurch gekennzeichnet, daß bei der Aufsitzstellung des Ventilgliedes (38) die ebene Endfläche (50) des Ventilgliedes einen im wesentlichen Linien-Dichtflächenkontakt an der Überschneidung des radial inneren Abschnittes (58) der kegelstumpfförmigen Fläche (52) mit dem zentralen Strömungsdurchlaß (42) bildet.

3. Magnetventilanordnung nach Anspruch 1 oder 2, dadurch gekennzeichnet, daß das Ventilglied (38) und das Ventilgehäuse (16) aus magnetisierbarem Material gefertigt sind, und daß das Ventilglied einen nichtmagnetischen Einsatz (48) in dem Bereich des Aufsitzkontaktes mit dem Ventilgehäuse enthält, der zur Verhinderung magnetischen Klebens des Ventilgliedes an dem Ventilgehäuse wirksam ist.

## Revendications

1. Montage de vanne électromagnétique comportant un corps de vanne (16), un alésage (22) dans le corps de vanne (16), une ouverture de fluide dans le corps de vanne (16) comportant une ouverture d'entrée (20) et une ouverture de sortie, un élément de vanne (38) disposé à coulissement dans l'alésage (22) et comportant une surface d'extrémité plane (50) destinée à venir s'appuyer sur l'ouverture de sortie, des moyens ressorts (44) pour écarter l'élément de vanne (38) de l'ouverture de sortie, et des moyens d'enroulement électromagnétique activable sélectivement (24) entourant une partie d'un élément de vanne (38) pour effectuer un mouvement sélectif de l'élément de vanne (38) en direction d'une position d'appui fermant l'ouverture de sortie, caractérisé en ce que l'ouverture de sortie dans le corps de vanne (16) est constituée par un passage de circulation centrale (42), une surface généralement frusto-conique (52) divergeant à partir du passage central de circulation (42) et comportant une partie interne radiale (58) et une partie externe radiale (56), un renfoncement annulaire (52) ayant une section en forme de "V", interrompant la surface frusto-conique (52) entre les parties interne et externe (58) et (56) de celle-ci, la surface d'extrémité plane (50) de l'élément de vanne (38) étant destinée à venir s'appuyer à l'intersection du passage central de circulation (42) et de la surface frusto-conique (52), de sorte qu'un contact substantiel entre l'élément de vanne (38) et la surface frusto-conique (52) est évité.

2. Montage de vanne électro-magnétique selon la revendication 1, caractérisé en ce que dans la position d'appui de l'élément de vanne (38), la surface d'extrémité plane (50) de l'élément de vanne réalise essentiellement un contact étanche sur une surface en bordure de l'intersection de la partie interne radiale (58) de la surface frusto-conique (52) et du passage de circulation centrale (52).

3. Montage de vanne électro-magnétique selon la revendication 1 ou 2, caractérisé en ce que l'élément de vanne (38) et le corps de vanne (16) sont en matériaux magnétiques, l'élément de vanne comportant un insert non magnétique (48) dans la région du contact d'appui avec le corps de vanne, permettant d'éviter un verrouillage magnétique entre l'élément de vanne et le corps de vanne.

Fig.1

Fig.2

Fig.3